Europäisches Patentamt

European Patent Office

Office européen des brevets

(19)

(11) Veröffentlichungsnummer : **0 222 312**
**B1**

(12) # EUROPÄISCHE PATENTSCHRIFT

(45) Veröffentlichungstag der Patentschrift :
19.10.88

(51) Int., Cl.⁴ : **F 16 D 59/02**

(21) Anmeldenummer : **86115326.0**

(22) Anmeldetag : **05.11.86**

(54) **Federdruckbremse.**

(30) Priorität : **09.11.85 DE 3539805**

(43) Veröffentlichungstag der Anmeldung :
**20.05.87 Patentblatt 87/21**

(45) Bekanntmachung des Hinweises auf die Patenterteilung : **19.10.88 Patentblatt 88/42**

(84) Benannte Vertragsstaaten :
**CH DE FR IT LI**

(56) Entgegenhaltungen :
**DE-U- 8 331 477**
**FR-A- 1 531 246**
**US-A- 4 280 073**

(73) Patentinhaber : **Binder Magnete GmbH**
**Mönchweiler Strasse 1**
**D-7730 Villingen-Schwenningen 1 (DE)**

(72) Erfinder : **Bausch, Edmund, Dipl.-Ing.**
**Bützestrasse 4**
**D-7730 Villingen-Schwenningen 21 (DE)**

(74) Vertreter : **Patentanwälte Dipl.-Ing. Klaus Westphal**
**Dr. rer. nat. Bernd Mussgnug Dr. rer.nat. Otto Buchner**
**Waldstrasse 33**
**D-7730 VS-Villingen (DE)**

EP 0 222 312 B1

Jouve, 18, rue St-Denis, 75001 Paris, France

**Beschreibung**

Die Erfindung betrifft eine Federdruckbremse nach dem Oberbegriff des Anspruchs 1.

Federdruckbremsen dieser Bauart werden insbesondere als an Elektromotoren angebaute Stillstandsbremsen verwendet, die bei stromloser Spule, also bei abgeschaltetem Motor, ihre Bremsstellung einnehmen, indem der Anker, meist durch Federn, gegen die Bremsscheibe gedrückt wird. Bei Erregung der Spule dagegen wird die Bremse gelüftet, indem die stärkere Magnetkraft den Anker gegen die Wirkung der Federn von der Bremsscheibe zurückzieht. Derartige Stillstandsbremsen werden insbesondere bei Stellmotoren eingesetzt, deren Läufer bei abgeschaltetem Motor oder bei Stromausfall in seiner Stellung blockiert werden muß.

Es sind Federdruckbremsen bekannt, bei denen der Anker durch Bolzen oder Stifte gegen Verdrehen gesichert ist, um das auf sie wirkende Bremsmoment aufzunehmen. Derartige Bremsen sind jedoch nicht absolut spielfrei, außerdem werden die Ankerführungen im Laufe der Zeit ausgeschlagen mit der Folge eines noch größeren Verdrehspiels. Ein Verdrehspiel des Ankers ist mit dem Nachteil einer unzureichend genauen Positionierung verbunden, wie sie in der NC- und Robotertechnik nicht vertretbar ist.

Es sind auch Lösungen bekannt, bei denen der Anker über Blattfedern geführt wird, um ein Verdrehspiel zu verhindern (z. B. DE-U-8 331 477). Die Anordnung der Blattfedern mußte infolge der gewählten Bremsenkonstruktion so gewählt werden, daß ein Eingriff in den aktiven Teil des Magnetkreises erfolgen muß, was ungünstige technische Daten zur Folge hat.

Der Erfindung liegt die Aufgabe zugrunde, eine Federdruckbremse der eingangs genannten Art so zu verbessern, daß eine einwandfreie Festlegung des Ankers in Drehrichtung bei nahezu widerstandsfreier Führung in Axialrichtung ohne Störung des elektromagnetischen Kreises zwischen Stator und Anker der Bremse erzielt wird.

Diese Aufgabe wird erfindungsgemäß durch das kennzeichnende Merkmal des Anspruchs 1 gelöst.

Durch die Anordnung der Blattfedern in der magnetisch neutralen Zone wird der Magnetkreis nicht gestört.

Es kann sowohl eine einzige ringförmig durchlaufende Blattfeder verwendet werden, die mehrfach in bestimmten Abständen am Stator und am Anker befestigt ist. Statt dessen können auch zwei oder mehrere, grundsätzlich beliebig viele Blattfedern verwendet werden, die in Umfangsrichtung nacheinander angebracht und jeweils an ihren beiden Enden am Stator bzw. am Anker befestigt sind.

In den Unteransprüchen sind vorteilhafte Ausgestaltungen der Federdruckbremse unter Schutz gestellt.

Bei einer Ausführungsform gemäß Anspruch 5 ist die Bremse als Einflächenbremse ausgebildet, so daß die Reibbeläge am Anker und an der Bremsscheibe sitzen und in Bremsstellung aneinander zur Anlage kommen. In diesem Falle erzeugen die Reibflächen ohne Rücksicht auf den sonst stets zu berücksichtigenden Verschleiß erfindungsgemäß ein übergroßes Haltemoment, wobei der bei der Verwendung als Stillstandsbremse weitgehend vernachlässigbare Verschleiß zugunsten eines großen Haltemoments in Kauf genommen wird.

Um eine einwandfreie Führung des Ankers in Axialrichtung und Versteifung in Drehrichtung noch zu verbessern, weisen die Blattfedern vorzugsweise die Eigenschaften gemäß den Ansprüchen 3, 4 und 6 auf.

Um die Kraft der Einrichtung zur Erzeugung der Bremskraft, vorzugsweise Bremsfedern oder dgl., noch zu steigern, und dadurch das Bremsmoment zu erhöhen, kann durch die Polkanten gemäß Anspruch 7 eine höhere magnetische Induktion und dadurch eine größere Lüftkraft in Bremsstellung erzeugt werden.

Die erfindungsgemäße Ankerbefestigung ist absolut spiel- und verschleißfrei, jedoch axial gut beweglich. Da die Federaufhängung in der Pollücke, d. h. zwischen einem Nord- und einem Südpol angeordnet ist, entstehen magnettechnisch keine Nachteile. Außerdem ist eine darartige Anordnung in wirtschaftlicher Weise herstellbar. Je nach Drehrichtung entstehen im gebremsten Zustand in den Blattfedern lediglich Zug- oder Druckkräfte, die eine Drehbewegung des Ankers infolge des an diesem wirksamen Bremsmomentes verhindern.

Vorzugsweise ist die erfindungsgemäße Federdruckbremse mit dem ringförmigen Stator als Stillstandsbremse beispielsweise am Flansch eines Elektromotors installiert. Dabei ergibt sich der weitere Vorteil, daß der Ringraum innerhalb des ringförmigen Stators zur Unterbringung eines weiteren Anbauteils, insbesondere eines Tachogenerators und/oder eines Winkelgebers oder auch eines Kugellagers für die Motorwelle zur Verfügung steht. Es wird daher vielfach ein großes Durchmesser-Längen-Verhältnis der Bremse angestrebt.

Die Bremskraft kann bei der erfindungsgemäßen Bremse beispielsweise durch die namengebenden Federn oder aber auch durch gleichartig wirkende druckmittelbetätigte Zylinder-Kolben-Einheiten bewirkt werden.

Die Erfindung wird anhand der Zeichnungen in Ausführungsbeispielen einer Einscheibenbremse und Einflächenbremse in Form einer elektromagnetisch betätigten Federdruckbremse näher erläutert. Es zeigen:

Fig. 1 einen Axialschnitt längs der Linie I-I in Fig. 3 durch eine Einscheibenbremse im gelüfteten Zustand,

Fig. 2 einen Axialschnitt längs der Linie II-II in Fig. 3 im Bremszustand,

Fig. 3 die Bremse nach Fig. 1 im Schnitt längs

der Linie III-III mit spielfreier Ankeraufhängung mit Blattfedern,

Fig. 4 einen Axialschnitt durch eine Einflächenbremse im gelüfteten Zustand,

Fig. 5 einen der Fig. 3 entsprechenden Schnitt bei spielfreier Ankeraufhängung mit Ringfeder,

Fig. 6 einen der Fig. 3 entsprechenden Schnitt bei spielfreier Ankeraufhängung mit mehrpoligem Lüftungssystem mit Blattfeder,

Fig. 7-10 Teilaxialschnitte durch vier weitere Ausführungsformen der Bremse.

In allen Figuren sind für gleiche oder entsprechende Teile die gleichen Bezugszeichen verwendet.

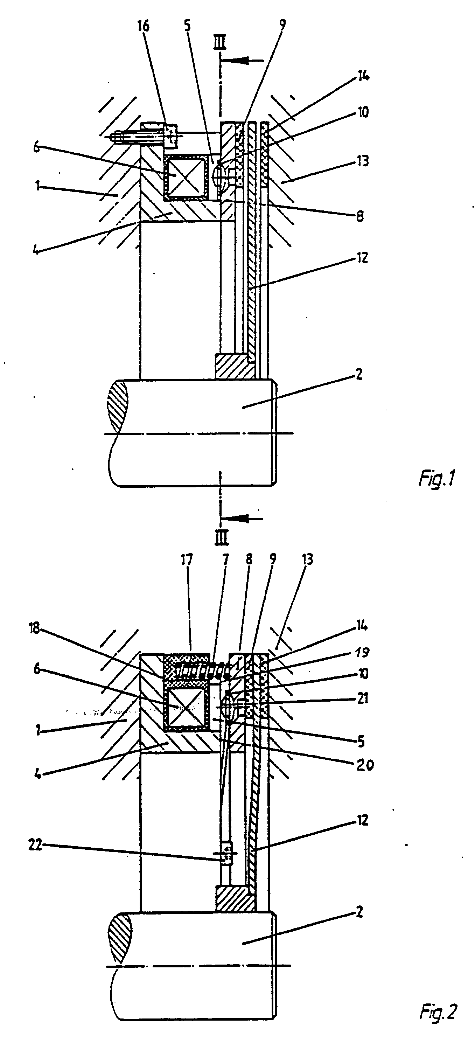

Die Bremse nach Fig. 1, 2, 3 ist seitlich an einem Flansch 1 montiert und besteht aus einem die Welle 2 im Abstand konzentrisch umgebenden Elektromagneten mit einem Anker 8, einer mit Preßsitz unverrückbar auf der Welle 2 befestigten Bremsscheibe 12 und einer Festfläche 13.

Der Elektromagnet weist einen ringförmigen Stator 4 auf, der am Flansch 1 mit Schraube 16 befestigt ist und topfförmigen Querschnitt besitzt, wobei die ringförmige Ausnehmung 5 auf der vom Flansch 1 abgewandten Seite offen ist. Eine ringförmige Spule 6 ist in der Ausnehmung 5 angeordnet. Druckfedern 7 sind längs des Umfangs des Stators 4 verteilt, in je einer Ausnehmung 17 des Spulenträgers 18 untergebracht und stützen sich einerseits am Boden dieser Ausnehmung 17 und andererseits an der Innenseite des Ankers 8 ab.

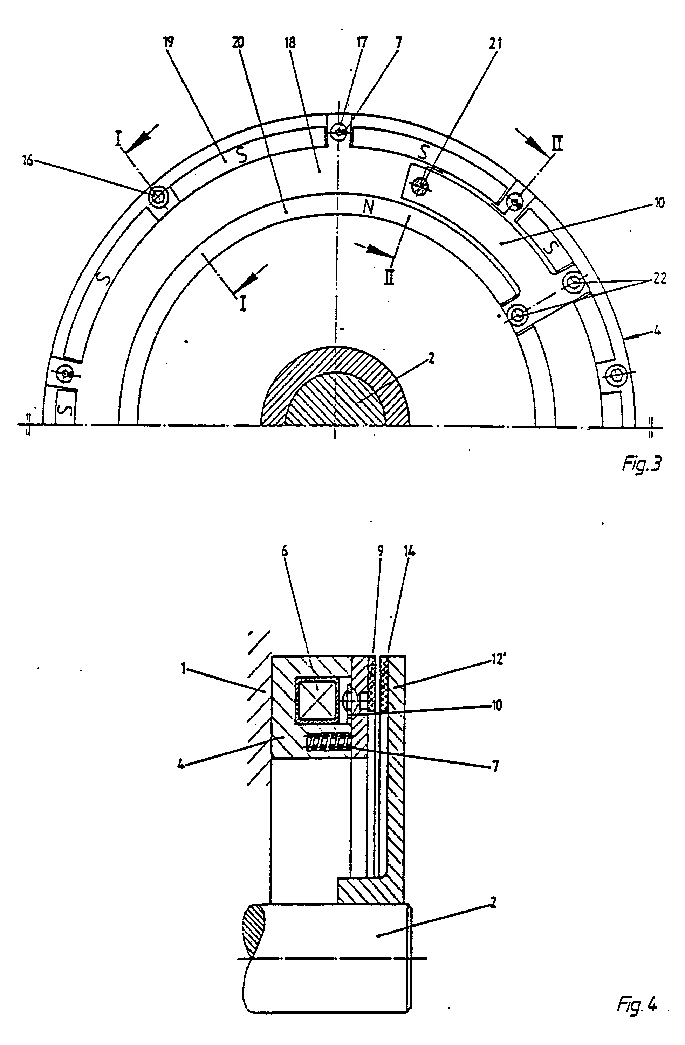

Der Anker 8 ist mittels Befestigung 21 mit ringförmigen Blattfedern 10 verbunden, die ihrerseits am Stator 4 an Stellen 22 befestigt sind, und von denen in Fig. 3 nur eine zu sehen ist. Die Blattfedern 10 erstrecken sich zwischen den Polen (S, N) 19 und 20.

Zwischen dem Stator 4 mit seiner Spule 6 und der Bremsscheibe 12 ist drehfest, jedoch axial verschiebbar der ringförmige Anker 8 gelagert, der die Welle 2 mit Abstand umgibt. Um eine Drehung des Ankers 8 zu verhindern, wird dieser über die an seinem Umfang verteilten axial beweglichen drehsteifen Blattfedern 10 oder eine geschlossene Ringfeder geführt, welche am Stator 4 einerseits und am Anker 8 andererseits befestigt ist.

Auf ihren der Bremsscheibe 12 zugewandten Seiten tragen der Anker 8 und die Festfläche 13 kreisringförmige Bremsbeläge 9 und 14, welche der Bremsscheibe 12 gegenüberliegen. Die Bremsscheibe 12 besteht aus elastisch biegsamem Federstahl.

Der freie, vom Stator 4 des Elektromagneten begrenzte Ringraum ist verhältnismäßig groß. Daher kann dieser innere Ringraum zur Unterbringung eines am Flansch 1 installierten Anbauteils ausgenutzt werden, beispielsweise eines Tachogenerators und/oder eines Winkelgebers, wodurch eine besonders raumsparende, kompakte Bauweise erzielt wird. In diesem Ringraum kann jedoch auch ein außerhalb des Flansches 1 angeordnetes Lager, insbesondere Kugellager, für die Welle 2 montiert werden. In vielen Anwendungsfällen ist ein großer Ringraum nicht erforderlich, so daß eine kleinere Bremse vorgesehen werden kann.

Fig. 1 zeigt die Federdruckbremse als Einscheibenbremse im gelüfteten Zustand, den sie einnimmt, wenn die Welle 2 rotiert und damit die Spule 6 erregt ist. In diesem Zustand zieht die Magnetkraft, welche die Kraft der Federn 7 überwindet, den Anker 8 bis zur Anlage am Stator 4 zurück, wobei die Federn 7 in die Ausnehmung 5 eingedrückt und die Reibscheibe 12 freigegeben wird.

In diesem nicht beaufschlagten und nicht verformten Zustand befindet sich die Bremsscheibe 12 im axialen Abstand sowohl vom Bremsbelag 9 auf dem Anker 8 als auch vom Bremsbelag 14 und kann sich frei mit der Welle 2 drehen.

Fig. 2 zeigt den Bremszustand der Bremse, den sie einnimmt, wenn die Welle 2 festgehalten werden soll oder der Strom ausfällt und damit die Spule 6 stromlos ist. In diesem Zustand drücken die Federn 7 gegen den Anker 8, welcher die Bremsscheibe 12 unter elastischer Verformung dieser Bremsscheibe gegen die Festfläche 13, also das feststehende Bremsenteil, preßt, wodurch die Bremsscheibe fest zwischen die beiden Bremsbeläge 9 und 14 eingeklemmt wird. Die Blattfedern 10, über die der Anker 8 am Stator 4 an den Stellen 22 fixiert ist, werden in axialer Richtung durchgebogen durch die Kraft der Bremsfedern 7 einerseits und durch die Lüftkraft andererseits. Aufgrund dieser beidseitigen Beaufschlagung der Bremsscheibe 12 und des Umstands, daß der Anker 8 drehfest über Blattfedern 10 am Stator 4 befestigt ist und daß die Bremskraft am äußeren Rand der Bremsscheibe 12 angreift, wird ein maximales und spielfreies Bremsmoment erzielt. Sobald die Bremsscheibe 12 beim Lüften der Bremse freigegeben wird, nimmt sie aufgrund ihrer Eigenelastizität wieder ihre in Fig. 1 gezeigte unverformte Gestalt an.

Da die Bremsscheibe 12 axial unverrückbar auf der Welle 2 sitzt und der Anker 8 ebenfalls drehfest montiert ist, ist auch eine spielfreie Blockierung der Motorwelle im Stillstand garantiert.

Fig. 4 zeigt im Prinzip den gleichen Aufbau wie Fig. 1 bis 3, jedoch ist die Bremse hier als Einflächenbremse ausgebildet. Die Bremsscheibe 12' ist drehfest mit der Welle 2 verbunden und nicht axial beweglich. Die Einflächenbremse ist einfacher aufgebaut und daher kostengünstiger als die Einscheibenbremse nach Fig. 1. Allerdings erzeugt die Einflächenbremse etwa das halbe Moment wie die Einscheibenbremse bei gleicher Baugröße. Um das Moment zu vergrößern, sind gemäß Fig. 4 ebenfalls zwei Reibbeläge 9 und 14 vorgesehen, die hier jedoch gegeneinander reiben. Man erreicht dadurch hohe Reibwerte. Eine derartige Reibpaarung kann im allgemeinen nur für Haltebremsen vorgesehen werden, da der Verschleiß als Leistungsbremse hoch wäre.

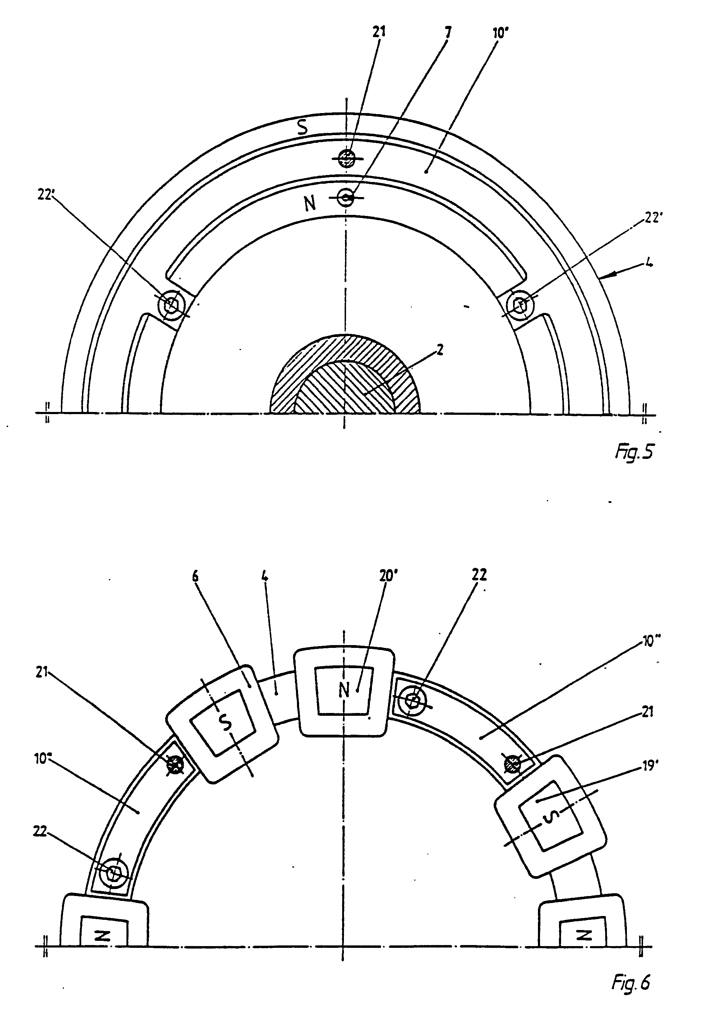

Fig. 5 zeigt ein Beispiel mit der Anordnung einer geschlossenen Ringfeder 10' zwischen den Polen S, N des Stators, die an den Stellen 22' am Stator 4 befestigt ist. Der nicht gezeichnete Anker wird an den Punkten 21 an der Ringfeder 10' befestigt.

Fig. 6 zeigt die Anordnung von Blattfedern 10" in den Pollücken zwischen den Polen 19', 20' (S, N) bei einem mehrpoligen Lüftsystem. Das Lüftsystem kann für eine Einflächen-, Einscheiben- oder Mehrscheiben-Federdruckbremse vorgesehen werden.

Die Bremse nach der Erfindung ist nicht auf die beschriebene Anwendungsform beschränkt, sondern läßt hinsichtlich ihrer konstruktiven Ausbildung mannigfache Varianten zu. Insbesondere können anstelle einer Ringspule 6 mehrere, gleichmäßig längs des Umfangs des Stators 4 verteilte, getrennte Spulen vorgesehen sein, beispielsweise drei Spulen.

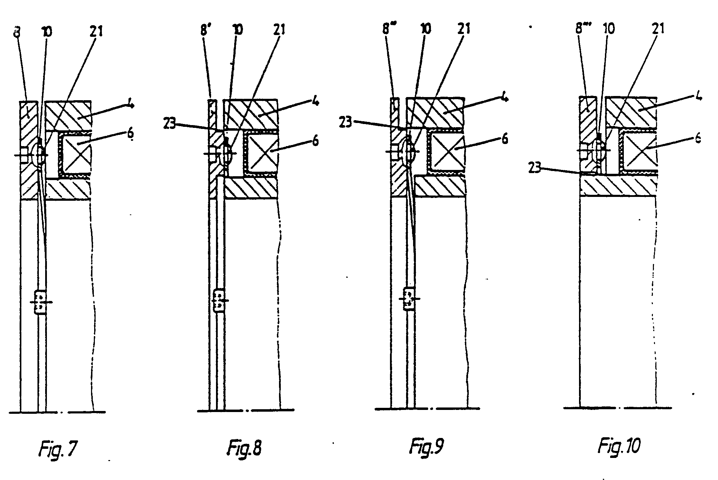

Da die zwischen den Magnetpolen N, S, also im magnetisch neutralen Bereich, angeordneten Blattfedern ein Verhältnis Breite zu Dicke > 1 aufweisen, sind sie nicht nur in tangentialer Richtung steif und in axialer Richtung leicht durchbiegbar, sondern auch in radialer Richtung steif. Dadurch erfährt der Anker eine stabile lineare Führung im Bereich des Lüftweges. Die Polgeometrie des Ankers 8', 8", 8''' kann infolgedessen entsprechend den Figuren 8, 9, 10 gewählt werden, ohne daß die Polkanten 23 sich berühren, obwohl an dieser Stelle ein Abstand von nur einigen Zehntel Millimeter vorhanden ist. Fig. 7 zeigt die Normalausführung des Ankers 8, d. h. ohne Polkanten. Infolge des geringen magnetischen Leitwertes und der hieraus resultierenden hohen magnetischen Induktion an den Polkanten 23 wird die Lüftkraft in Bremsstellung angehoben. Die Kräfte der Bremsfedern 7 können dadurch gesteigert werden, was ein größeres Bremsmoment zur Folge hat gegenüber der bekannten Polform nach Fig. 7.

**Patentansprüche**

1. Federdruckbremse mit einer auf einer drehbaren Welle (2) unverrückbar befestigten Bremsscheibe (12, 12'), mit einem der Bremsscheibe auf der einen Seite gegenüberliegenden, kreisringförmigen magnetischen Anker (8, 8', 8", 8'''), der die Welle mit Abstand konzentrisch umgibt und drehfest, jedoch axial verschiebbar angeordnet ist, mit einer Einrichtung zur Erzeugung der Bremskraft, durch welche der Anker gegen die Bremsscheibe gepreßt wird, und mit einem elektromagnetischen Stator (4) zum Lüften der Bremse, durch welchen der Anker von der Bremsscheibe abgehoben wird, wobei der Anker über eine oder mehrere sich in Umfangsrichtung erstreckende Blattfedern (10, 10', 10") am Stator der Bremse befestigt ist, dadurch gekennzeichnet, daß die Blattfeder bzw. Blattfedern (10, 10', 10") in der magnetisch neutralen Zone von Stator (4) und Anker (8, 8', 8", 8''') angeordnet ist bzw. sind.

2. Federdruckbremse nach Anspruch 1, dadurch gekennzeichnet, daß die Blattfedern (10, 10', 10") ringförmig oder teilringförmig ausgebildet sind.

3. Federdruckbremse nach einem der vorangehenden Ansprüche, dadurch gekennzeichnet, daß die Blattfedern (10, 10', 10") in Lüftwegrichtung leicht durchbiegbar und in Zug- bzw. Druckrichtung knickfest und verzugsfrei gegenüber dem wirkenden Bremsmoment sind.

4. Federdruckbremse nach Anspruch 3, dadurch gekennzeichnet, daß die Blattfedern (10, 10', 10") ein großes Verhältnis von Breite zu Dicke besitzen.

5. Federdruckbremse nach einem der vorangehenden Ansprüche, wobei die Bremse als Einflächenbremse ausgebildet ist, so daß die Reibbeläge am Anker und an der Bremsscheibe sitzen und in Bremsstellung aneinander zur Anlage kommen, dadurch gekennzeichnet, daß die Reibflächen (9, 14) ohne Rücksicht auf den Verschleiß ein übergroßes Haltemoment erzeugen.

6. Federdruckbremse nach einem der vorangehenden Ansprüche, dadurch gekennzeichnet, daß die Blattfedern (10, 10', 10") aus nicht magnetisierbarem Werkstoff bestehen.

7. Federdruckbremse nach einem der vorangehenden Ansprüche, dadurch gekennzeichnet, daß der Anker (8', 8", 8''') in Richtung zum Stator (4) hin vorspringende Polkanten (23) bildet.

**Claims**

1. Compressional spring brake device comprising a brake disc ridgidly mounted on a rotatable shaft (12, 12'), an annular magnetic armature (8, 8', 8", 8''') facing the brake disc on one side, said armature surrounding the shaft concentrically at a distance, said armature arranged non-rotatable but axially slidable, means generating braking power, pressing the armature against the brake disc, an electromagnetic stator (4) for disengaging the brake, said stator lifting the armature from the brake disc, said armature secured to the stator by one·or several leaf springs (10, 10', 10') extending in peripheral direction, characterised in that the leaf spring or springs (10, 10', 10") respectively, are arranged in the magnetically neutral area of said stator (4) and said armature (8, 8', 8", 8''').

2. Brake device according to claim 1, characterised in that the leaf springs (10, 10', 10") are formed ring-like or partially ring-like.

3. Brake device according to one of the preceding claims, characterised by the leaf springs (10, 10', 10") being flexible, so that they can be easily bended in the direction of the lifting path, said leaf springs being resistant to buckling in the direction of tension or compression respectively, and said leaf springs being free of distortion under the effective brake torque.

4. Brake device according to claim 3, characterised by the leaf springs having a large ratio of width to thickness.

5. Brake device according to one of the preceding claims, said brake device being a single surface brake, so that the friction linings are attached to the armature and the brake disc and butt against each other in braking position, characterised in that the friction areas (9, 14) generate a very large holding torque regardless of abrasion.

6. Brake device according to one of the preceding claims, characterised by leaf springs made from a non-magnetizable material.

7. Brake device according to one of the preceding claims, characterised by the armature (8', 8", 8''') forming pole edge (23) projecting towards the stator (4).

## Revendications

1. Frein à pression de ressort, avec un disque de frein (12, 12'), qui est fixé de manière définitive sur un arbre (2) susceptible de tourner, avec un induit magnétique (8, 8', 8", 8''') en forme d'anneau de cercle, qui est opposé sur un côté, au disque de frein, qui entoure l'arbre, concentriquement et à distance et est disposé de manière fixe en rotation, mais toutefois mobile axialement, avec un dispositif de production de la force de freinage, au moyen duquel l'induit est pressé contre le disque de frein et avec un stator (4) électromagnétique, pour le desserrage du frein, au moyen duquel l'induit est écarté du disque de frein, l'induit étant à cette occasion fixé sur le stator du frein, au moyen d'un ou de plusieurs ressorts à lame (10, 10', 10") qui s'étendent en direction périphérique, caractérisé en ce que le ressort à lame, respectivement les ressorts à lame (10, 10', 10") est respectivement, sont disposé(s) dans la zone magnétiquement neutre du stator (4) et de l'induit (8, 8', 8", 8''').

2. Frein à pression de ressort selon la revendication 1, caractérisé en ce que les ressorts à lame (10, 10', 10") sont réalisés sous une forme annulaire, ou bien partiellement annulaire.

3. Frein à pression de ressort selon l'une des revendications précédentes, caractérisé en ce que les ressorts à lame (10, 10', 10") sont facilement fléchissables dans le sens de la course de desserrage et qu'ils sont résistants à la flexion, dans le sens de la traction, respectivement de la compression et qu'ils sont indéformables vis-à-vis de l'action du couple de freinage.

4. Frein à pression de ressort selon la revendication 3, caractérisé en ce que les ressorts à lame (10, 10', 10") possèdent un rapport largeur/épaisseur qui est élevé.

5. Frein à pression de ressort selon l'une des revendications précédentes, le frein étant réalisé sous forme de frein à une seule surface, de telle sorte que les garnitures de frottement soient situées sur l'induit et sur le disque de frein et qu'elles viennent en appui réciproque dans la position de freinage, caractérisé en ce que les surfaces de frottement (9, 14) produisent un couple d'arrêt surdimensionné, sans considération d'usure.

6. Frein à pression de ressort selon l'une des revendications précédentes, caractérisé en ce que les ressorts à lame (10, 10', 10") sont composés d'un matériau non magnétisable.

7. Frein à pression de ressort selon l'une des revendications précédentes, caractérisé en ce que l'induit (8', 8", 8''') forme des bords de pôle (23), émergeant en direction du stator (4).

Fig.1

Fig.2

Fig.3

Fig. 4

Fig. 5

Fig. 6

Fig. 7

Fig. 8

Fig. 9

Fig. 10